(19) Europäisches Patentamt
European Patent Office
Office européen des brevets

(11) **EP 2 149 036 B1**

(12) **EUROPÄISCHE PATENTSCHRIFT**

(45) Veröffentlichungstag und Bekanntmachung des Hinweises auf die Patenterteilung:
**11.02.2015 Patentblatt 2015/07**

(21) Anmeldenummer: **08758369.6**

(22) Anmeldetag: **02.05.2008**

(51) Int Cl.:
**G01D 5/347** *(2006.01)*    **G01B 11/00** *(2006.01)*

(86) Internationale Anmeldenummer:
**PCT/EP2008/003553**

(87) Internationale Veröffentlichungsnummer:
**WO 2008/138502 (20.11.2008 Gazette 2008/47)**

(54) **OPTISCHE POSITIONSMESSEINRICHTUNG**

OPTICAL POSITION MEASURING DEVICE

DISPOSITIF DE MESURE DE POSITION OPTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007 DE 102007023300**

(43) Veröffentlichungstag der Anmeldung:
**03.02.2010 Patentblatt 2010/05**

(73) Patentinhaber: **Dr. Johannes Heidenhain GmbH 83301 Traunreut (DE)**

(72) Erfinder: **HOLZAPFEL, Wolfgang 83119 Obing (DE)**

(56) Entgegenhaltungen:
**EP-A- 1 739 395        EP-A1- 0 163 362
DE-A1- 10 133 266     DE-U1- 8 628 805
US-B1- 6 885 457**

## Beschreibung

Die vorliegende Erfindung betrifft eine optische Positionsmesseinrichtung.

Bekannte optische Positionsmesseinrichtungen zur Erfassung der Relativposition zweier beweglicher Objekte umfassen üblicherweise eine Abtasteinheit sowie einen hierzu in mindestens einer Messrichtung beweglichen Maßstab. Abtasteinheit und Maßstab sind jeweils mit den beiden Objekten verbunden, beispielsweise mit zueinander beweglichen Maschinenteilen. Als problematisch erweist sich hierbei grundsätzlich die korrekte Montage von Abtasteinheit und Maßstab zueinander. Im Fall einer unerwünschten Verdrehung von Maßstab und Abtasteinheit um eine Achse senkrecht auf den Maßstab spricht man üblicherweise von einer sog. Moire-Verdrehung. Derartige Moire-Verdrehungen haben im Messbetrieb einen Abfall der Abtastsignal-Intensität und unerwünschte Fehler bei der Positionsmessung zur Folge.

Eine Verringerung von Moiré-Fehlern ist beispielsweise mit einer optischen Positionsmesseinrichtung möglich, wie sie in der WO 02/23131 A1 der Anmelderin offenbart ist. Diese umfasst neben einem Maßstab, z.B. ausgebildet als linearer Auflicht-Maßstab, eine relativ in mindestens einer Messrichtung hierzu verschiebbare Abtasteinheit. Auf Seiten der Abtasteinheit ist neben einem Abtastgitter, mehreren optoelektronischen Detektorelementen u.a. auch mindestens ein optisches Reflektorelement in Form eines Retroreflektors angeordnet. Über den Retroreflektor erfolgt eine Rückreflexion der vom Maßstab erstmalig reflektierten Teilstrahlenbündel in Richtung des Maßstabs. Dort werden die Teilstrahlenbündel dann anschließend ein zweites Mal reflektiert, bevor schließlich interferierende Teilstrahlenbündel auf die Detektorelemente gelangen und dort verschiebungsabhängig modulierte Abtastsignale erzeugen. Das Reflektorelement ist in der gattungsgemäßen Positionsmesseinrichtung als Dachkantprisma mit optischer Retroreflektor-Funktionalität ausgebildet. Weitere Positionsmesseinrichtungen mit als prismenartigen Retroreflektorelementen ausgebildeten optischen Reflektorelementen sind etwa aus den Druckschriften EP 387 520 B1 oder EP 1 347 271 A1 bekannt.

Der vorliegenden Erfindung liegt das Problem zugrunde, eine optische Positionsmesseinrichtung zu schaffen, die eine gegenüber dem Stand der Technik nochmals verbesserte Kompensation von möglichen Fehlern gewährleistet, wie sie insbesondere bei Moire-Verdrehungen von Abtasteinheit und Maßstab resultieren.

Dieses Problem wird erfindungsgemäß durch eine Positionsmesseinrichtung mit den Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Erfindungsgemäß ist nunmehr vorgesehen, den Maßstab als kombinierte Baueinheit auszubilden, die neben einer Messteilung auch ein oder mehrere Reflektorelemente umfasst. Bereits vor dem Maßstab erfolgt eine Aufspaltung des von einer Lichtquelle kommenden Strahlenbündels in mindestens zwei Teilstrahlenbündel, die im Maßstab je zweimal die Messteilung und einmal das Reflektorelement beaufschlagen, bevor diese wiederum in Richtung der Abtasteinheit propagieren, wo eine Detektion der verschiebungsabhängigen Signale erfolgt.

Aufgrund einer derartigen Ausbildung des Maßstabs bzw. dem damit möglichen Abtaststrahlengang kann eine ggf. resultierende Moire-Verdrehung zuverlässig optisch korrigiert werden. Moire-Verdrehungen wirken sich in der erfindungsgemäßen optischen Positionsmesseinrichtung nicht mehr fehlerhaft auf die Positionsmessung aus und führen nicht mehr zu einem Abfallen der Abtastsignal-Intensität. Besonders vorteilhaft ist dies insbesondere bei der Verwendung kleiner Teilungsperioden auf Seiten der Messteilung, d.h. bei hochauflösenden Positionsmesseinrichtungen.

Als weiterer Vorteil der erfindungsgemäßen Lösung ist anzuführen, dass augrund des seitlichen Versatzes der in den Maßstab einfallenden und austretenden Teilstrahlenbündel nunmehr auf eine ansonsten erforderliche schräge Beleuchtung der Messteilung zur Trennung dieser Teilstrahlenbündel verzichtet werden kann. Es resultiert eine Abtastoptik mit erhöhter Gesamt-Symmetrie, was deutliche größere Justagetoleranzen zur Folge hat.

Die erfindungsgemäße optische Positionsmesseinrichtung erlaubt die Erfassung der Relativposition einer Abtasteinheit sowie eines hierzu in mindestens einer Messrichtung beweglichen Maßstabs. Der Maßstab ist als kombinierte Baueinheit ausgebildet, welche mindestens ein Reflektorelement sowie eine Messteilung umfasst. Der Abtasteinheit sind eine Lichtquelle sowie ein oder mehrere Detektorelemente zugeordnet. Die Abtasteinheit umfasst Aufspaltmittel, die das von der Lichtquelle emittierte Strahlenbündel in mindestens zwei Teilstrahlenbündel in Messrichtung aufspalten, die nach der Aufspaltung in Richtung des Maßstabs propagieren.

In einer vorteilhaften Ausführungsform der erfindungsgemäßen optischen Positionsmesseinrichtung ist die Messteilung dergestalt ausgebildet, dass die mindestens zwei aus entgegengesetzt symmetrischen Richtungen einfallenden Teilstrahlenbündel eine entgegengesetzte Ablenkwirkung erfahren und nach dem Beaufschlagen der Messteilung in die gleichen Raumrichtungen propagieren.

In einer weiteren Ausführungsform der erfindungsgemäßen optischen Positionsmesseinrichtung ist die Messteilung dergestalt ausgebildet, dass die mindestens zwei aus unterschiedlichen Richtungen einfallenden Teilstrahlenbündel eine entgegengesetzte Ablenkwirkung erfahren und nach dem Beaufschlagen der Messteilung in symmetrische Raumrichtungen propagieren.

Die Messteilung kann etwa dergestalt ausgebildet sein, dass auf die einfallenden Teilstrahlenbündel

- eine erste Ablenkwirkung in einer Ebene resultiert, die durch die Messrichtung sowie eine Normale auf den Maßstab aufgespannt wird und
- eine zweite Ablenkwirkung in eine Richtung resultiert, die quer zur Messrichtung orientiert ist, wobei mit der zweiten Ablenkung eine Fokussierung auf das mindestens eine Reflektorelement verbunden ist.

Mit Vorteil ist die Messteilung als alternierend linienförmige Zylinderlinsenstruktur ausgebildet.

Es ist ferner möglich, die Periodizität der Messteilung dergestalt zu wählen, dass in beiden Ablenkrichtungen lediglich Teilstrahlenbündel einer +1. und - 1. Beugungsordnung austreten und unerwünschte, höhere Beugungsordnungen, insbesondere die +3. und -3. Beugungsordnungen, unterdrückt werden.

In einer möglichen Variante erfahren die aufgespaltenen Teilstrahlenbündel im Maßstab zunächst eine Beugung an der Messteilung, daraufhin eine Reflexion an dem mindestens einen Reflektorelement und schließlich eine erneute Beugung an der Messteilung, bevor sie wieder in Richtung der Abtasteinheit propagieren.

Die Messteilung kann erfindungsgemäß sowohl als Durchlichtteilung oder als Auflichtteilung ausgebildet sein.

Es ist ferner möglich, dass der Maßstab einen transparenten Trägerkörper umfasst und auf einer Seite des Trägerkörpers die Messteilung angeordnet ist, während auf der entgegengesetzten Seite des Trägerkörpers das mindestens eine Reflektorelement angeordnet ist.

Hierbei kann auf der der Abtasteinheit zugewandten Seite des Trägerkörpers eine als Durchlichtteilung ausgebildete Messteilung angeordnet sein.

Mit Vorteil ist das Reflektorelement entweder als mindestens ein planer Reflektorspiegel oder als totalreflektierende Fläche ausgebildet.

Die Aufspaltmittel in der Abtasteinheit können mindestens ein Durchlicht-Abtastgitter umfassen.

Es ist zudem möglich, dass auf dem Maßstab mehrere Teilungsspuren angeordnet sind.

Hierbei kann die zweite Ablenkwirkung aller Teilungsspuren einen gemeinsamen Fokus aufweisen.

Mit Vorteil ist die Messteilung des Maßstabs als Phasenteilung mit einer Phasenhöhe von 180° ausgebildet.

Schließlich kann in einer weiteren Variante die zweite Ablenkwirkung so dimensioniert sein, dass der Strahlversatz am Maßstab zwischen ein- und austretendem Strahlenbündel größer als der Strahlquerschnitt ist.

Weitere Einzelheiten und Vorteile der vorliegenden Erfindung seien anhand der nachfolgenden Beschreibung von Ausführungsbeispielen in Verbindung mit den Figuren erläutert.

Es zeigt

Fig. 1a    eine Frontansicht einer Abtastoptik eines ersten Ausführungsbeispiels der erfindungsgemäßen Positionsmesseinrichtung;

Fig. 1b    eine Queransicht der Abtastoptik des ersten Ausführungsbeispiels der erfindungsgemäßen Positionsmesseinrichtung;

Fig. 2a    eine detaillierte Frontansicht zur Veranschaulichung der Ablenkwirkung des Maßstabs mit Retroreflektorwirkung des ersten Ausführungsbeispiels der erfindungsgemäßen Positionsmesseinrichtung;

Fig. 2b    eine detaillierte Queransicht zur Veranschaulichung der Ablenkwirkung des Maßstabs mit Retroreflektorwirkung des ersten Ausführungsbeispiels der erfindungsgemäßen Positionsmesseinrichtung;

Fig. 3    eine Detailansicht der Struktur einer als Retroreflektorteilung ausgebildeten Teilung in der erfindungsgemäßen Positionsmesseinrichtung gemäß den Figuren 1a, 1b, 2a, 2b;

Fig. 4a    eine Frontansicht einer Abtastoptik eines zweiten Ausführungsbeispiels der erfindungsgemäßen Positionsmesseinrichtung;

Fig. 4b    eine Queransicht der Abtastoptik des zweiten Ausführungsbeispiels einer erfindungsgemäßen Positionsmesseinrichtung;

Fig. 5a    eine weitere Frontansicht zur Veranschaulichung der Ablenkwirkung des Maßstabs aus den Figuren 4a und 4b;

Fig. 5b    eine weitere Frontansicht zur Veranschaulichung der Ablenkwirkung des Maßstabs aus den Figuren 4a und 4b;

Fig. 6a    eine Frontansicht einer Abtastoptik eines dritten Ausführungsbeispiels der erfindungsgemäßen Positionsmesseinrichtung;

Fig. 6b    eine Queransicht der Abtastoptik des dritten Ausführungsbeispiels der erfindungsgemäßen Positionsmesseinrichtung;

Fig. 7a    eine Frontansicht einer Abtastoptik eines vierten Ausführungsbeispiels der erfindungsgemäßen Positionsmesseinrichtung;

Fig. 7b    eine Queransicht der Abtastoptik des vierten Ausführungsbeispiels einer erfindungsgemäßen Positionsmesseinrichtung.

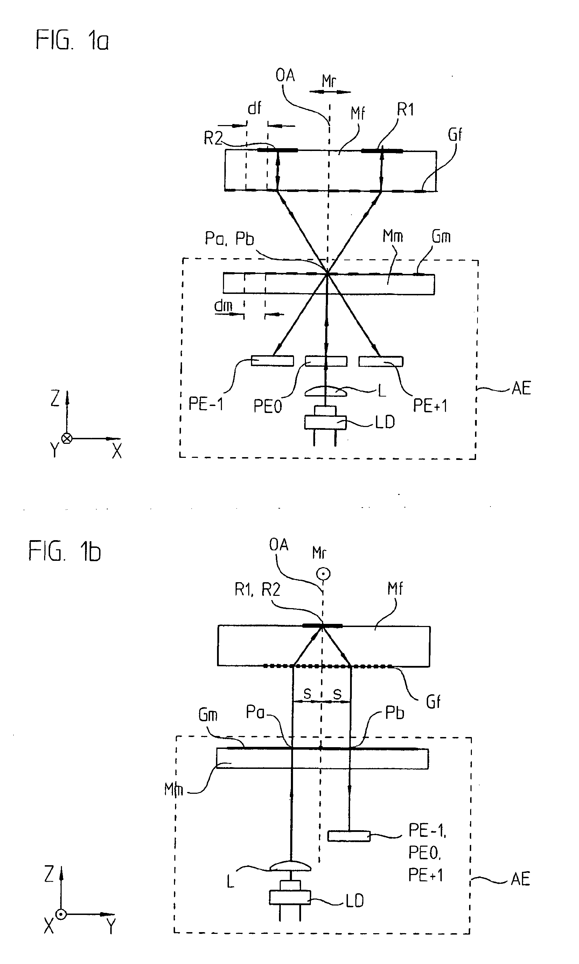

Anhand der Figuren 1a, 1b, 2a, 2b und 3 sei nachfolgend eine erste Ausführungsform der erfindungsgemäßen Positionsmesseinrichtung erläutert. Die Figuren 1 a und 1 b zeigen eine Abtastoptik des ersten Ausführungsbeispiels einer erfindungsgemäßen Positionsmesseinrichtung in verschiedenen Ansichten, wobei die Positionsmesseinrichtung eine Abtasteinheit AE sowie einen relativ hierzu in der Messrichtung Mr beweglichen Maßstab Mf umfasst. Abtasteinheit AE und Maßstab Mf sind mit den - nicht dargestellten-Objekten verbunden, deren Relativposition zu erfassen ist. Hierbei kann es sich beispielsweise um zwei zueinander bewegliche Maschinenteile handeln.

Der Maßstab Mf der Positionsmesseinrichtung ist erfindungsgemäß als kombinierte Baueinheit ausgebildet, die zwei Reflektorelemente R1, R2 sowie eine Messteilung Gf umfasst. Der Abtasteinheit AE sind eine Lichtquelle LD sowie mehrere Detektorelemente PE-1, PE0, PE+1 zugeordnet; ferner umfasst die Abtasteinheit AE Aufspaltmittel Mm mit einem Durchlicht-Abtastgitter Gm. Alternativ zur dargestellten Anordnung der Lichtquelle LD und der Detektorelemente PE-1, PE0, PE+1 in einem Gehäuse der Abtasteinheit AE könnte auch vorgesehen werden, diese Elemente räumlich getrennt von der Abtasteinheit AE anzuordnen und über geeignete Lichtleiter mit der Abtasteinheit AE zu verbinden und auf diese Art und Weise der Abtasteinheit AE zuzuordnen.

Das emittierte Lichtbündel der Lichtquelle LD, beispielsweise ausgebildet als Laserdiode, wird durch eine Kollimatorlinse L kollimiert und parallel zur optischen Achse OA senkrecht auf die Aufspaltmittel Mm gelenkt. An deren Oberseite spaltet das Durchlicht-Abtastgitter Gm am Aufspaltort Pa das Lichtbündel in mindestens zwei Teilstrahlenbündel auf, vorzugsweise in die - 1. und +1. Beugungsordnung. Beide Teilstrahlenbündel propagieren in Richtung des Maßstabes Mf, der auf der Unterseite eines transparenten Trägerelements, die der Abtasteinheit AE zugewandt ist, eine als besondere Durchlichtteilung ausgebildete Messteilung Gf trägt. Die Messteilung Gf lenkt die Teilstrahlenbündel in Messrichtung Mr gesehen parallel zur optischen Achse OA. Quer dazu fokussiert die Messteilung Gf die Teilstrahlenbündel und lenkt sie ab, so dass sie fokussiert auf die Reflektorelemente R1 bzw. R2 auf der Rückseite des Trägerelements des Maßstabs Mf treffen, die abgewandt zur Abtasteinheit AE orientiert ist. Nach der Reflexion an den Reflektorelementen R1, R2 gelangen die Teilstrahlenbündel wiederum auf die Messteilung Gf. Dort werden sie in Messrichtung Mr wieder abgelenkt, wobei die Ablenkung symmetrisch zu den eintreffenden Teilstrahlenbündeln erfolgt. Quer zur Messrichtung Mr kollimiert die Messteilung Gf die Teilstrahlenbündel wieder und lenkt sie parallel zur optischen Achse OA. Die austretenden Teilstrahlenbündel gelangen zurück zum Durchlicht-Abtastgitter Gm in der Abtasteinheit AE, wo sie am Vereinigungsort Pb durch Beugung in resultierende +1., 0. und -1. Beugungsordnung überlagert und zur Interferenz gebracht werden.

Die Teilungsstruktur des Durchlicht-Abtastgitters Gm der Aufspaltmittel Mm wird so gewählt, dass die in -1., 0., und +1. resultierender Beugungsordnung austretenden Teilstrahlenbündel jeweils um 120° phasenversetzt in ihrer Intensität moduliert sind und durch Detektorelemente PE-1, PE0 und PE+1 erfasst werden.

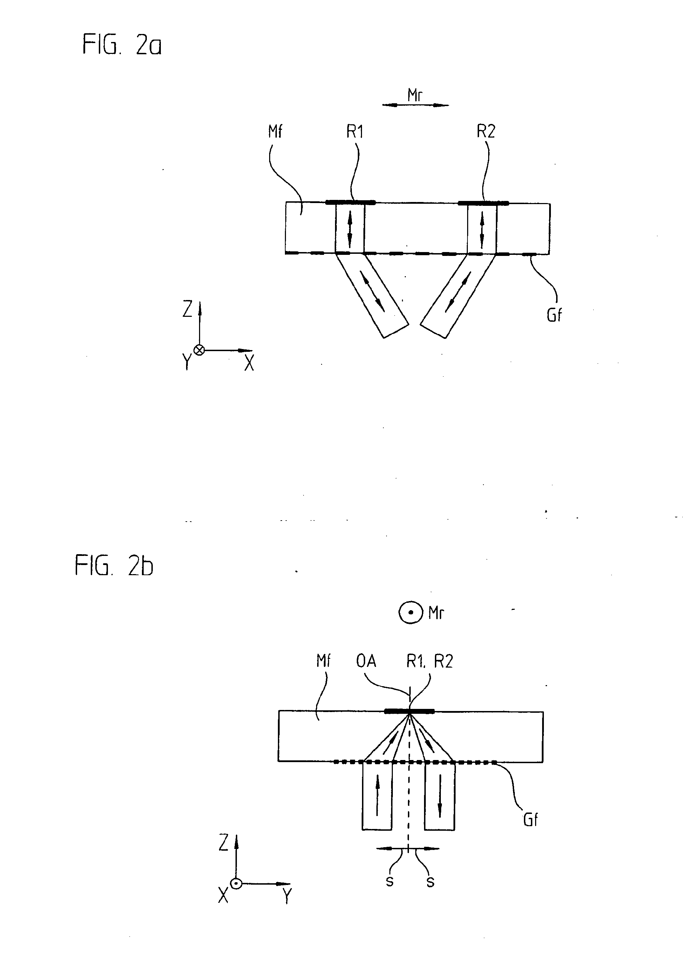

Mit maßgeblich für die vorliegende Erfindung ist die Ausgestaltung der Messteilung Gf. In den Figuren 2a und 2b ist zur Veranschaulichung der optischen Wirkung der Messteilung Gf der Strahlenverlauf im Abtaststrahlengang im Bereich des Maßstabs Mf im Detail dargestellt. Die Messteilung Gf implementiert in Form einer diffraktiven Struktur gleichzeitig zwei Funktionen.

Zum einen lenkt sie die einfallenden Teilstrahlenbündel in bzw. entgegen der Messrichtung Mr ab. Diese Ablenkwirkung entspricht der optischen Wirkung einer periodischen Teilung mit einer Teilungsperiode bzw. Periodizität df. Da die in diesem Beispiel als Durchlichtteilung ausgebildete Messteilung Gf zweimal durchlaufen wird, muss für dieses Ausführungsbeispiel die Periodizität df gleich der Teilungsperiode bzw. Periodizität dm der Durchlicht-Abtastgitters Gm der Aufspaltmittel Mm sein.

Zum anderen stellt die Messteilung Gf eine diffraktive Zylinderlinse dar. Diese Zylinderlinse fokussiert die Teilstrahlenbündel quer zur Messrichtung Mr auf die Reflektorelemente R1 bzw. R2, wie dies aus Figur 2b ersichtlich ist. Die gleichzeitige Ablenkung quer zur Messrichtung Mr kommt durch den Versatz S der einfallenden Teilstrahlenbündel zum Zentrum Z der Zylinderlinse zustande. Die Reflektorelemente R1 und R2 können sowohl als metallische Spiegel als auch als Interferenzspiegel ausgebildet sein.

Die Zylinderlinse, die im Strahlenverlauf zweimal durchlaufen wird, stellt zusammen mit den Reflektorelementen R1 bzw. R2 einen optischen Retroreflektor dar, der quer und nur quer zur Messrichtung Mr die einfallende Strahlrichtung umkehrt. Dieser Retroreflektor besitzt die gleiche optische Wirkung wie ein Dachkantprisma mit einem 90° Prismenwinkel. Die Retroreflexion ermöglicht es, wesentlich größere Verdrehungen des Maßstabs Mf bzw. der Abtasteinheit AE mit den Aufspaltmitteln Mm um die optische Achse OA zu kompensieren. Bei einer solchen, als Moire-Verdrehung bezeichneten Verkippung des Maßstabs Mf bzw. der Abtasteinheit AE mit den Aufspaltmitteln Mm treten entgegengesetzte Strahlneigungen der beiden Teilstrahlenbündel quer zur Messrichtung Mr auf. Ohne Retroreflektor bewirkt die Moire-Verkippung einen Signaleinbruch, der insbesondere bei Positionsmesseinrichtungen mit kleiner Signalperiode sehr groß ist. Äußerst kleine zulässige Justage-Toleranzen in Bezug auf die Moiré-Verkippung sind die Folge. Durch die optische Wirkung des Retroreflektors werden die Strahlneigungen quer zur Messrichtung Mr kompensiert, so dass wesentlich größere Moiré-Toleranzen selbst bei Positionsmesseinrichtungen mit sehr kleiner Signalperiode erlaubt sind. Weitere Ausführungen dazu sind in der DE 10 2005 029 917 A1 sowie in der DE 10 2006 042 743.2 zu finden.

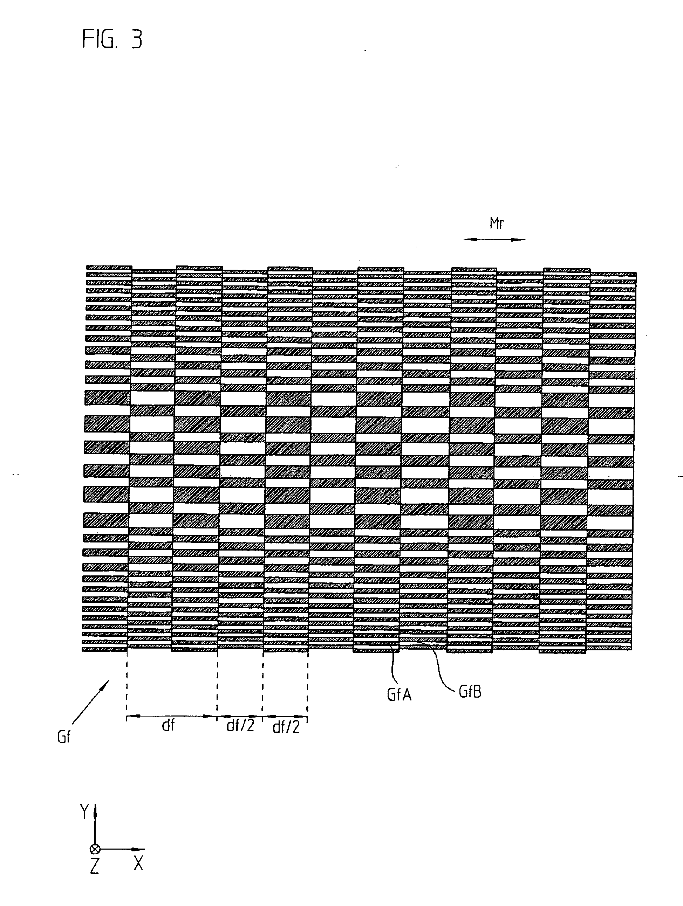

Im Unterschied zu den bekannten (Abtast-)Teilungen aus der DE 10 2005 029 917 A1 muss die Messteilung Gf im vorliegenden Fall die einfallenden Teilstrahlenbündel sowohl in als auch entgegen der Messrichtung Mr ablenken und muss damit die aufspaltende Wirkung einer normalen Teilung besitzen. Dies hat zur Folge, dass die nötige Messteilung Gf anders dimensioniert werden muss. Figur 3 zeigt Details der Struktur der Messteilung Gf ("Retroreflektorteilung"). Sie besteht aus einzelnen Streifen GfA, GfB mit einer Breite von je df/2, die periodisch in Messrichtung Mr angeordnet sind. Die beiden Streifen GfA, GfB sind zueinander komplementär, d.h. die Strukturen können ineinander übergeführt werden, indem die beiden Zustände der binären Struktur an jeder Stelle vertauscht werden. Jeder Streifen GfA, GfB stellt eine diffraktive Zylinderlinse dar. Sie wird unter Zuhilfenahme folgender Phasenfunktion $\varphi(y)$ berechnet:

$$\varphi(y) = [\frac{2\pi}{\lambda} \cdot n \cdot \sqrt{Df^2 + y^2}\,] \bmod 2\pi$$

mit:

y        := Querposition
Df       := Dicke des Maßstabs Mf
n        := Brechungsindex des Maßstabs Mf
λ        := Wellenlänge der verwendeten Lichtquelle.

Im Streifen GfA liegt der erste Zustand an jeder Stelle mit $|\varphi(y)| \leq \pi/2$ vor, im Streifen GfB liegt dort der komplementäre zweite Zustand. Die binäre Struktur wird vorzugsweise als Phasenteilung mit einer Phasenhöhe von 180° ausgebildet. Da im Randbereich die lokalen Teilungsperioden bereits im Bereich der Wellenlänge λ liegen, können mit Hilfe numerischer Optimierungen Phasenhöhen und Strukturbreiten bzw. -formen lokal so angepasst werden, dass eine maximale Beugungseffizienz der genutzten Beugungsordnungen erreicht wird. Diese Optimierung liefert in der Regel verrundete Strukturelemente statt der dargestellten Rechtecke gemäß Figur 3. Besonders vorteilhaft - wenngleich aufwendig - ist es, die streifenförmigen Zylinderlinsen als geblazte Strukturen auszubilden.

Die Messteilung Gf erzeugt, wie in Figur 1b dargestellt ist, einen Strahlversatz 2*s quer zur Messrichtung Mr. Dies erlaubt eine Beleuchtungsrichtung der kollimierten Lichtquelle senkrecht zum Maßstab Mm und zu den Aufspaltmitteln Mf, sowie zugleich eine, in y-Richtung daneben angeordnete Detektion mittels der Detektorelemente PE-1, PE0 und PE+1. Der Strahlversatz 2*s muss dazu größer als der Strahlquerschnitt sein. Eine schräge Beleuchtungsrichtung ist hier nicht erforderlich. Durch diese hohe System-Symmetrie werden besonders große Lagetoleranzen in Bezug auf den Maßstab Mf, die Aufspaltmittel Mm und die Abtasteinheit AE erreicht. Insbesondere für den Abstand zwischen dem Maßstab Mf und den Aufspaltmitteln Mf gibt es keine in der Praxis relevante Toleranzbeschränkung mehr.

Generell können die Messteilungen gemäß dem ersten Ausführungsbeispiel (Retroreflektorteilung) mit sehr vielen Abtastprinzipien kombiniert werden. So ist es einfach möglich Abtastoptiken mit einer Moire-Kompensation auszustatten und evtl. auch als Wahlalternative für den jeweiligen Kunden anzubieten.

In der bislang erläuterten Ausführungsform weisen die Messteilung Mf als auch das Durchlicht-Abtastgitter Mm jeweils durchgehende Teilungsfelder auf. Zusätzliche Einschränkungen der Lagetoleranzen des Maßstabs Mf und der Abtasteinheit AE zueinander, die bei mehreren Varianten aus der WO 2007/034379 A2 nötig sind, um die einzelnen Strahlenbündel durch die zugehörigen, voneinander abgegrenzten Teilungsfelder zu leiten, sind in den erfindungsgemäßen Ausführungsformen nicht erforderlich.

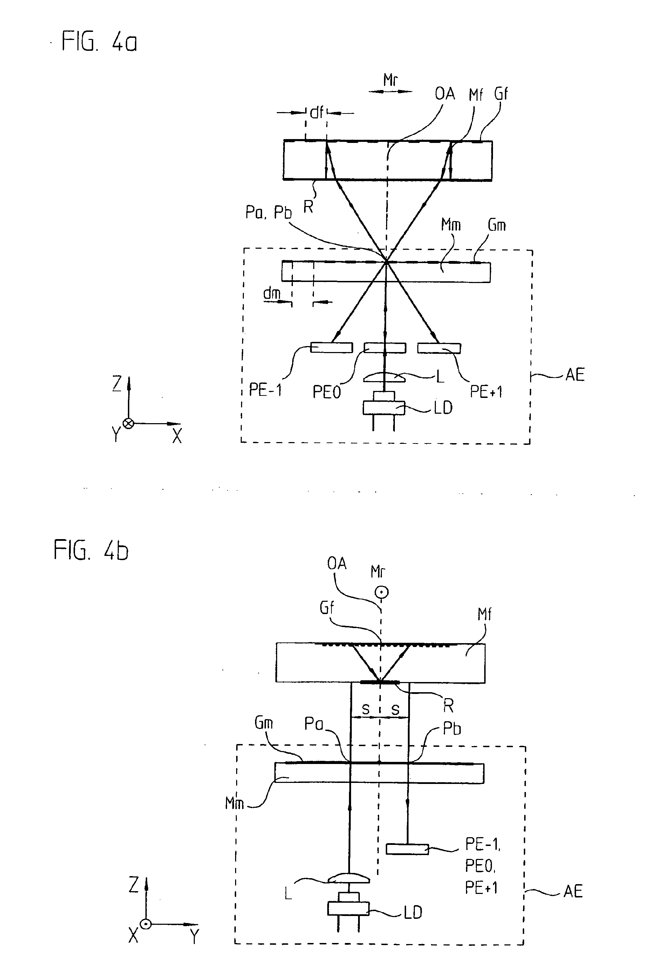

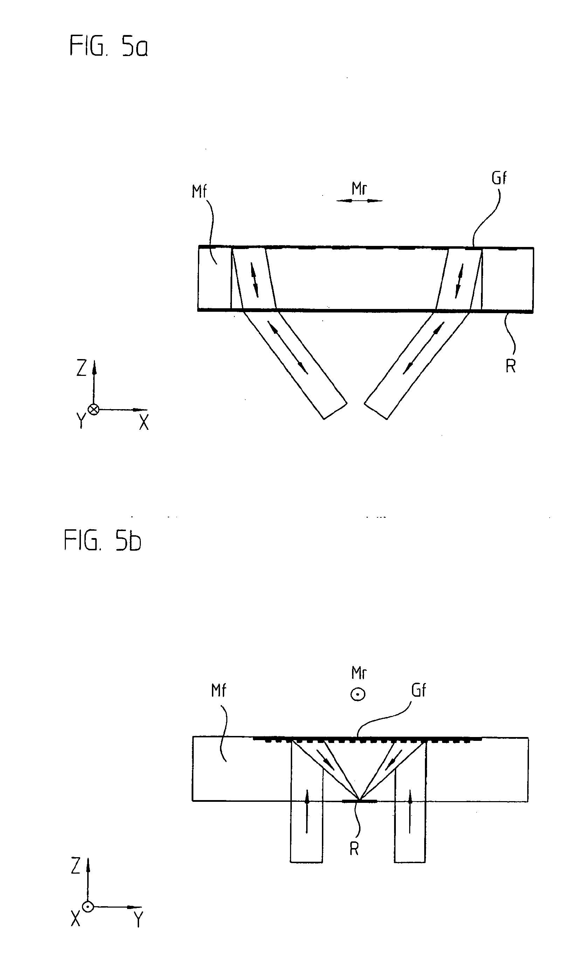

Die Figuren 4a und 4b zeigen die Abtastoptik eines zweiten Ausführungsbeispiels einer erfindungsgemäßen Positionsmesseinrichtung, analog zu den Darstellungen des ersten Ausführungsbeispiels in den Figuren 1 a und 1b. In den Figuren 5a und 5b ist ebenfalls analog zum ersten Ausführungsbeispiel der Strahlenverlauf im Abtaststrahlengang im Bereich des Maßstabs Mf dargestellt.

Auf Seiten der Abtasteinheit AE wird das emittierte Lichtbündel der Lichtquelle LD wiederum durch eine Kollimatorlinse L kollimiert und parallel zur optischen Achse OA senkrecht auf die Aufspaltmittel Mm gelenkt. An dessen Oberseite spaltet wiederum das Durchlicht-Abtastgitter Gm am Aufspaltort Pa das einfallende Lichtbündel in Teilstrahlenbündel in einer -1. und einer +1. Beugungsordnung auf.

Die zwei aufgespaltenen Teilstrahlenbündel gelangen auf den relativ zur Abtasteinheit AE beweglichen Maßstab Mf, der an seiner Unterseite bzw. der der Abtasteinheit AE zugewandten Seite, ein Reflektorelement R, ausgebildet als Reflexionsschicht, in einem zentralen Bereich trägt; die Reflexionsschicht besitzt eine reflektierende Wirkung in Richtung der zur Abtasteinheit AE abgewandten Seite. Seitlich benachbart zur Reflexionsschicht werden die aufgespaltenen Teilstrahlenbündel an der Unterseite des Maßstabs Mf zur optischen Achse OA hin gebrochen, abgelenkt und gelangen auf die nunmehr als Reflexionsteilung bzw. Auflichtteilung ausgebildete Messteilung Gf an der Oberseite des Maßstabs Mf. Die Messteilung Gf ist in diesem Beispiel als Reflexionsphasengitter ausgebildet und besitzt hinsichtlich seiner Beugungswirkung die gleichen optischen Eigenschaften wie die als Durchlichtteilung ausgebildete Teilung Gf im ersten Ausführungsbeispiel der Figuren 1a, 1b. Dies bedeutet, dass die auf die Messteilung Gf einfallenden Teilstrahlenbündel in Messrichtung Mr gesehen zur optischen Achse OA hin parallel gerichtet werden und quer zur Messrichtung Mr die Teilstrahlenbündel auf die Reflexionsschicht bzw. das Reflektorelement R hin fokussiert werden. Die optische Wirkung der Messteilung entspricht damit also wiederum in Überlagerung in Messrichtung Mr einem Aufspaltgitter und quer zur Messrichtung Mr einer diffraktiven Zylinderlinse. Die Brennweite der diffraktiven Zylinderlinse ist so gewählt, dass der Fokus in der Ebene des Reflektorelements R auf derselben zu liegen kommt.

Anschließend erfolgt eine Reflexion der Teilstrahlenbündel an der Reflexionsschicht zurück in Richtung der Messteilung Gf, wo die Teilstrahlenbündel erneut kollimiert und gleichzeitig in Messrichtung Mr abgelenkt werden. Aufgrund des Versatzes s zwischen dem einfallenden Teilstrahlenbündel und der optischen Achse OA der Zylinderlinse resultiert ein Strahlversatz 2s zwischen den in den Maßstab Mf einfallenden und den daraus ausfallenden Teilstrahlenbündeln quer zur Messrichtung Mr, d.h. in y-Richtung. Die Teilstrahlenbündel erfahren beim Verlassen des Maßstabs Mf wieder eine Brechung und treffen alle am Vereinigungsort Pb auf das Durchlicht-Abtastgitter Gm der Aufspaltmittel Mm, wo sie analog zum ersten Ausführungsbeispiel durch Beugung in +1. bzw. -1. Beugungsordnung überlagert und zur Interferenz gebracht werden. Die Teilungsstruktur des Durchlicht-Abtastgitters Gm wird wie im ersten Ausführungsbeispiel so gewählt, dass die in -1., 0., und +1. resultierender Beugungsordnung daraus austretenden Lichtbündel im Fall der Relativbewegung der zueinander verschiebbaren Komponenten jeweils um 120° phasenversetzt in ihrer Intensität moduliert sind und durch Detektorelemente PE-1, PE0 und PE+1 erfasst werden.

Die Besonderheit dieses Ausführungsbeispiels liegt in der Ausgestaltung des Maßstabs Mf, welcher als sog. Rückflächenmaßstab ausgebildet ist mit einer als Reflexionsphasengitter ausgebildeten Messteilung Gf. In Bezug auf deren konkrete optische Eigenschaften sei auf die Ausführungen zum ersten Ausführungsbeispiel verwiesen, die nunmehr auf die Reflexionsphasenteilung zu übertragen sind.

Besonders vorteilhaft an diesem Beispiel ist, dass der Maßstab Mf eine verschmutzungssichere Rückflächen-Reflexionsteilung als Messteilung Gf aufweist. Eine Verschmutzung kann nicht in die Furchen der Phasenteilung eindringen, da die Messteilung Gf durch eine flächige Reflexionsschicht, z.B. eine Metallschicht, geschützt ist. Die gegenüberliegende Seite des Maßstabs Mf weist nur ebene Flächen auf, die bei einer Verschmutzung leicht gereinigt werden können.

In Ergänzung des dargestellten zweiten Ausführungsbeispiels kann noch vorgesehen werden, auf der Unterseite des Maßstabs Mf eine Entspiegelungsschicht anzubringen, um Störreflexe bei den in Trägerkörper des Maßstabs Mf ein- und austretenden Teilstrahlenbündeln zu vermeiden.

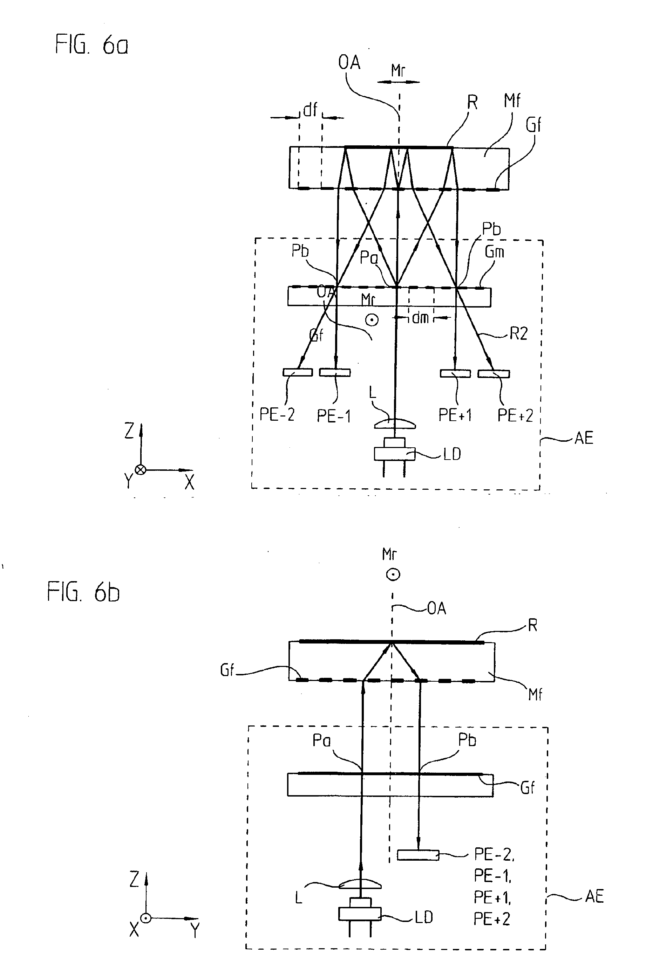

Ein drittes Ausführungsbeispiel sei nachfolgend anhand der Figuren 6a und 6b erläutert, die wiederum verschiedene Ansichten einer erfindungsgemäßen Positionsmesseinrichtung analog zu den vorherigen Beispielen zeigen.

Wie in den vorherigen Beispielen ist auf Seiten der Abtasteinheit AE vorgesehen, das emittierte Lichtbündel der Lichtquelle LD durch eine Kollimatorlinse L zu kollimieren und parallel zur optischen Achse OA senkrecht auf die Aufspaltmittel Mm zu lenken. An dessen Oberseite spaltet das Durchlicht-Abtastgitter Gm am Aufspaltort Pa das einfallende Lichtbündel nunmehr in drei Teilstrahlenbündel in einer -1., 0. und einer +1. Beugungsordnung auf.

Die drei aufgespaltenen Teilstrahlenbündel propagieren in Richtung des relativ zur Abtasteinheit AE beweglichen Maßstabs Mf, der an seiner Unterseite bzw. der der Abtasteinheit AE zugewandten Seite, die Messteilung Gf trägt; die Messteilung Gf ist in dieser Variante wiederum als spezielle Durchlichtteilung ausgebildet. Die Messteilung Gf besitzt in diesem Ausführungsbeispiel eine Teilungsperiode bzw. Periodizität df = 2*dm. Dadurch werden die Teilstrahlenbündel in Messrichtung Mr gesehen nicht genau parallel zur optischen Achse OA wie im ersten Ausführungsbeispiel abgelenkt, vielmehr behalten die Teilstrahlenbündel gemäß Figur 6a nach dem erstmaligen Durchlaufen der Messteilung Gf einen Teil ihrer Strahlneigung. In Messrichtung Mr resultiert dadurch ein geringfügiger Strahlversatz innerhalb des Maßstabs Mf. Quer dazu fokussiert die Messteilung Gf die Teilstrahlenbündel analog zum ersten Beispiel und lenkt sie wiederum so ab, dass sie fokussiert auf das Reflektorelement R auf der Rückseite des Trägerelements des Maßstabs Mf treffen, die abgewandt zur Abtasteinheit AE orientiert ist. Nach der Reflexion am Reflektorelement R gelangen die Teilstrahlenbündel wiederum auf die Messteilung Gf. Dort werden sie in Messrichtung Mr wieder abgelenkt, wobei die Ablenkung symmetrisch zu den eintreffenden Teilstrahlenbündeln erfolgt. Quer zur Messrichtung Mr kollimiert die Messteilung Gf die Teilstrahlenbündel wieder und lenkt sie parallel zur optischen Achse OA. Die austretenden Teilstrahlenbündel gelangen zurück zum Durchlicht-Abtastgitter Gm in der Abtasteinheit AE, wo sie am Vereinigungsort Pb durch Beugung in +1. bzw. -1. Beugungsordnung überlagert und zur Interferenz gebracht werden. Über vier Detektorelemente PE-1, PE-2, PE+1, PE+2 erfolgt die Detektion von vier um je 90° phasenverschobenen Positionssignalen. Im Bedarfsfall könnten durch die Parallel-Verschaltung der Detektorelemente PE-1 und PE+1 auch drei, um 120° phasenverschobene Positionssignale erfasst werden.

Als besonderer Vorteil dieser Ausführungsform der erfindungsgemäßen Positionsmesseinrichtung ist anzuführen, dass aufgrund der senkrechten Beleuchtung entlang der optischen Achse OA eine hohe Symmetrie des Abtaststrahlengangs resultiert. Daraus wiederum ergibt sich eine große Unempfindlichkeit gegenüber Abtastabstandsänderungen und Verkippungen. Ferner tritt hier ein großer Versatz zwischen dem eintretenden Lichtbündel der Lichtquelle LD und den austretenden, von den Detektorelementen PE-1, PE-2, PE+1, PE+2 erfassten Lichtbündeln auf. Dadurch, dass die Detektorelemente PE-1, PE-2, PE+1, PE+2 nur solche Strahlenbündel erfassen, die sowohl in Messrichtung Mr als auch quer dazu versetzt sind, gelangen alle anderen - durch ungewollte Beugungsordnungen entstehenden - Strahlenbündel nicht auf die Detektorelemente PE-1, PE-2, PE+1, PE+2, so dass die erzeugten Signalströme besonders geringe Störungen aufweisen.

Wie bei den vorherigen Ausführungsformen sind aufgrund der retroreflektierenden Eigenschaften des Maßstabs Mf keine zusätzlichen Bauteile in der Abtasteinheit AE zur Realisierung einer retroreflektierenden Wirkung nötig. Insgesamt ergibt sich ein verringerter Aufwand.

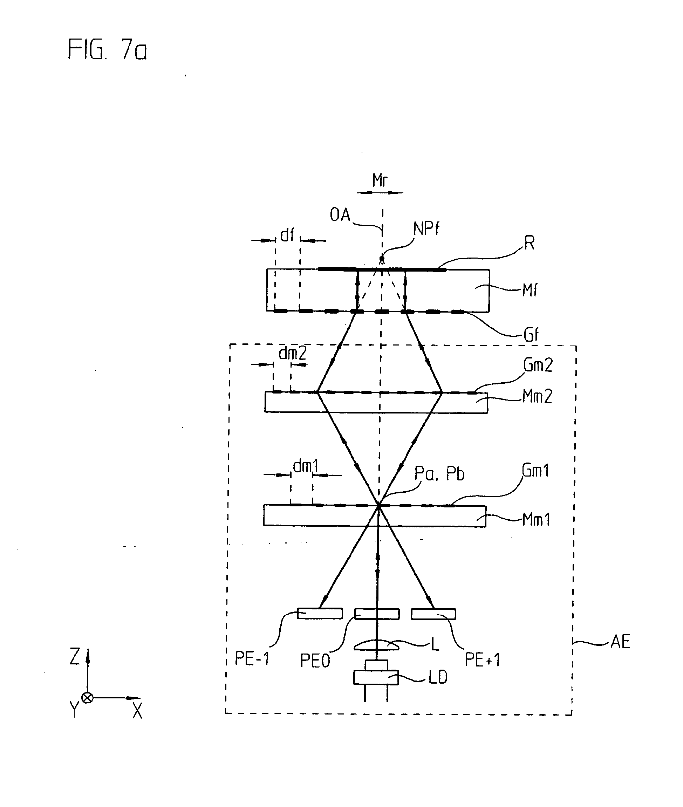

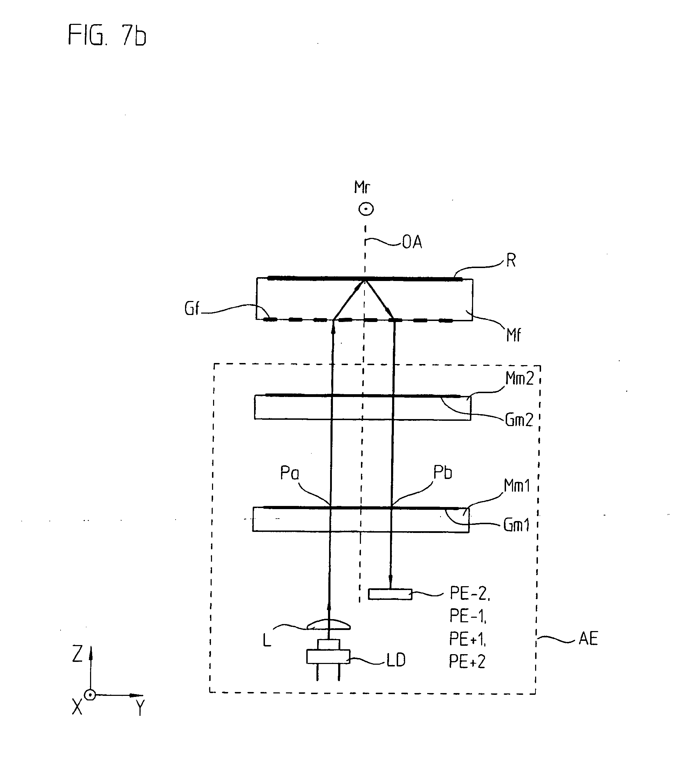

Abschließend sei ein viertes Ausführungsbeispiel anhand der Figuren 7a und 7b erläutert, die wiederum verschiedene Ansichten einer erfindungsgemäßen Positionsmesseinrichtung analog zu den vorherigen Beispielen zeigen.

Auf Seiten der Abtasteinheit AE wird wiederum das von der Lichtquelle LD emittierte Strahlenbündel durch eine Kollimatorlinse L kollimiert und parallel zur optischen Achse OA senkrecht auf die Aufspaltmittel Mm1, Mm2 gelenkt. Im Unterschied zu den vorherigen Ausführungsbeispielen sind die Aufspaltmittel Mm1, Mm2 in der Abtasteinheit AE nunmehr zweiteilig ausgebildet und umfassen ein erstes Durchlicht-Abtastgitter Gm1 mit der Periodizität dm1 sowie ein zweites Durchlicht-Abtastgitter Gm2 mit der Periodizität dm2; die Periodizitäten dm1, dm2 der beiden Durchlicht-Abtastgitter Gm1, Gm2 sind gemäß dm2 = dm1/2 gewählt.

Über das erste Durchlicht-Abtastgitter Gm1, angeordnet auf der Oberseite eines transparenten Trägerelements, erfolgt am Aufspaltort Pa eine Aufspaltung des einfallenden Strahlenbündels in zwei Teilstrahlenbündel -1. und +1. Beugungsordnung. Die gebeugten Teilstrahlenbündel propagieren in Richtung des zweiten Durchlicht-Abtastgitter Gm2, an dem die beiden Teilstrahlenbündel wieder in Richtung der optischen Achse OA zurück abgelenkt werden, bevor sie in Richtung des relativ zur Abtasteinheit AE beweglichen Maßstabs Mf weiter propagieren. Der Maßstab Mf trägt an seiner Unterseite bzw. an der der Abtasteinheit AE zugewandten Seite die Messteilung Gf; die Messteilung Gf ist in dieser Variante wiederum als spezielle Durchlichtteilung mit den bereits oben erwähnten optischen Wirkungen ausgebildet. Die Messteilung Gf besitzt in diesem Ausführungsbeispiel eine Teilungsperiode bzw. Periodizität df = dm1. Nach dem Beaufschlagen der Messteilung Gf werden die Teilstrahlenbündel parallel zur optischen Achse OA gerichtet, quer hierzu in der zy-Ebene gemäß Figur 7b abgelenkt und auf das Reflektorelement R fokussiert, welches auf der Oberseite des Trägerelements des Maßstabs Mf angeordnet ist. Nach der Reflexion am Reflektorelement R gelangen die Teilstrahlenbündel wiederum auf die Messteilung Gf. Dort werden sie in Messrichtung Mr wieder in die Einfallsrichtung abgelenkt. Quer zur Messrichtung Mr kollimiert die Messteilung Gf die Teilstrahlenbündel wieder und lenkt sie parallel zur optischen Achse OA. Die austretenden Teilstrahlenbündel gelangen zurück zum zweiten Durchlicht-Abtastgitter Gm2 in der Abtasteinheit AE, wo sie in Richtung des Vereinigungsorts Pb auf dem ersten Durchlicht-Abtastgitter Gm1 ablenkt werden. Am Vereinigungsort Pb werden die aufgespaltenen Teilstrahlenbündel wiederum überlagert und zur Interferenz gebracht. Über drei Detektorelemente PE-1, PE0, PE+1 erfolgt die Detektion von drei um je 120° phasenverschobenen Positionssignalen.

Aufgrund der zwei vorgesehenen Durchlicht-Abtastgitter Gm1, Gm2 und dem damit verbundenen Abtaststrahlengang resultiert in diesem Ausführungsbeispiel eine spezielle Lage des sogenannten neutralen Drehpunkts NPf der erfindungsgemäßen Positionsmesseinrichtung. Unter dem neutralen Drehpunkt versteht man hierbei denjenigen Punkt, um den eine Verkippung von Abtasteinheit AE und Maßstab Mf erfolgen kann, ohne dass die erzeugten Positionssignale fehlerhaft sind. Wie aus Figur 7a ersichtlich, liegt der neutrale Drehpunkt NPf oberhalb der Messteilung Gf bzw. oberhalb des Maßstabs Mf. Dies ist vorteilhaft für Mess-Applikationen, bei denen der Maßstab Mf und die Abtasteinheit AE unterhalb des sogenannten Tool Center Points angeordnet werden müssen und wegen hoher Genauigkeitsanforderungen die Abbe-Bedingung eingehalten werden muss. Darüber hinaus ist auch bei diesem Ausführungsbeispiel auf die hohe Symmetrie des Abtaststrahlengangs hinzuweisen, die sich günstig auf Abtastabstands- und Verkippungstoleranzen auswirkt.

Neben den erläuterten Beispielen gibt es im Rahmen der vorliegenden Erfindung natürlich noch eine Vielzahl weiterer Ausführungsformen.

Beispielsweise kann die Reflexion am Reflektorelement R des Maßstabs Mf auch durch eine Totalreflexion erfolgen. In diesem Fall ist keine Reflektorbeschichtung mehr notwendig.

Darüberhinaus ist es möglich, auf Seiten der erfindungsgemäß ausgebildeten Maßstäbe Referenzmarken zur Herstellung des Absolutbezugs anzuordnen. Besonders vorteilhaft ist hierbei etwa die Anordnung sogenannter gechirpter Referenzmarken, die in Messrichtung eine gechirpte Teilung aufweisen, die erfindungsgemäß mit einer diffraktiven Zylinderlinse quer zur Messrichtung kombiniert wird. Die Struktur dieser gechirpten Teilung entspricht dabei lokal derjenigen aus dem Beispiel in Figur 3, wobei sich aber die Teilungsperiode df entlang der Messrichtung Mr kontinuierlich ändert ("gechirpt"). Der Abtaststrahlengang der Referenzmarke kann dabei einem der Abtaststrahlengänge der obigen Ausführungsformen entsprechen, wobei die Teilstrahlenbündel hier in Messrichtung Mr aufgrund der gechirpten Teilungen leicht divergent bzw. konvergent verlaufen. Zur genauen Auslegung einer solchen Referenzmarke mit gechirpten Teilungen sei hier auf die DE 196 48 018 A1 der Anmelderin verwiesen.

Meist werden Referenzmarkenspuren und periodische Inkrementalspuren nebeneinander auf dem Maßstab angeordnet. Das hat zur Folge, dass auch die effektiven Messpunkte für beide Spuren quer zur Messrichtung nebeneinander liegen und bei einer Moire-Verkippung des Maßstabs die Referenzmarkensignale relativ zu den Inkrementalsignalen verschoben werden. Dieser Nachteil lässt sich erfindungsgemäß vermeiden, wenn die alle Teilungsspuren so ausgelegt sind, dass deren Zylinderlinse eine gemeinsame optische Achse aufweisen und sowohl die Inkremental- als auch die Referenzmarkenspuren jeweils symmetrisch zur optischen Achse angeordnet sind. In diesem Fall liegen beide effektiven Messpunkte auf der optischen Achse und eine eventuelle Moire-Verkippung hat dann keinen Einfluss mehr auf die Zuordnung von Inkremental- und Referenzmarkensignalen.

Des Weiteren erweist sich als günstig, wenn die lokalen Periodizitäten der Messteilung so fein gewählt werden, dass nur die gewünschten Beugungsordnungen austreten und höhere, unerwünschte Beugungsordnungen unterdrückt werden. Insbesondere ist es günstig, wenn die +3. und -3. Beugungsordnungen sowohl in Messrichtung als auch quer dazu nicht mehr propagieren können. Die Teilungsperiode df sollte dazu kleiner als das Dreifache der Wellenlänge der Lichtquelle gewählt werden. Dadurch erhöht sich die Beugungseffizienz erheblich, d.h. es resultieren intensitätsstärkere Positionssignale.

Schließlich sei darauf hingewiesen, dass die erfindungsgemäßen Maßnahmen selbstverständlich auch in Verbindung mit rotatorischen Positionsmesseinrichtungen eingesetzt werden können. Die verschiedenen linearen Teilungen wären dann durch geeignet ausgebildete Radialteilungen zu ersetzen; beispielsweise müsste dann anstelle der linearen Messteilung eine Radialteilung mit einer Zylinderlinse verwendet werden, die lokal jeweils in radialer Richtung fokussiert etc..

**Patentansprüche**

1.　Optische Positionsmesseinrichtung zur Erfassung der Relativposition einer Abtasteinheit (AE) sowie einem hierzu in mindestens einer Messrichtung (Mr) beweglichen Maßstab (Mf), wobei

- der Maßstab (Mf) als kombinierte Baueinheit ausgebildet ist, welche mindestens ein Reflektorelement (R1, R2; Pr; R) sowie eine Messteilung (Gf) und einen transparenten Trägerkörper umfasst und auf einer Seite des Trägerkörpers die Messteilung (Gf) angeordnet ist, während auf der entgegengesetzten Seite des Trägerkörpers das mindestens eine Reflektorelement (R1, R2; Pr; R) angeordnet ist und
- der Abtasteinheit (AE) eine Lichtquelle (LD) sowie ein oder mehrere Detektorelemente (PE-1, PE0, PE+1) zugeordnet sind und
- die Abtasteinheit Aufspaltmittel (Mm; Mm1, Mm2) umfasst, die das von der Lichtquelle (LD) emittierte Strahlenbündel in mindestens zwei Teilstrahlenbündel In Messrichtung (Mr) aufspalten, die nach der Aufspaltung in Richtung des Maßstabs (Mf) propagieren.

2.　Optische Positionsmesseinrichtung nach Anspruch 1, wobei die Messteilung (Gf) dergestalt ausgebildet ist, dass die mindestens zwei aus entgegengesetzt symmetrischen Richtungen einfallenden Teilstrahlenbündel eine entgegengesetzte Ablenkwirkung erfahren und nach dem Beaufschlagen der Messteilung (Gf) in die gleichen Raumrichtungen propagieren.

3.　Optische Positionsmesseinrichtung nach Anspruch 1, wobei die Messteilung (Gf) dergestalt ausgebildet ist, dass die mindestens zwei aus unterschiedlichen Richtungen einfallenden Teilstrahlenbündel eine entgegengesetzte Ablenkwirkung erfahren und nach dem Beaufschlagen der Messteilung (Gf) in symmetrische Raumrichtungen propagieren.

4.　Optische Positionsmesseinrichtung nach Anspruch 2, wobei die Messteilung (Gf) dergestalt ausgebildet ist, dass auf die einfallenden Teilstrahlenbündel

- eine erste Ablenkwirkung in einer Ebene resultiert, die durch die Messrichtung (Mr) sowie eine Normale auf den Maßstab (Mf) aufgespannt wird und

- eine zweite Ablenkwirkung in eine Richtung resultiert, die quer zur Messrichtung (Mr) orientiert ist, wobei mit der zweiten Ablenkung eine Fokussierung auf das mindestens eine Reflektorelement (R1, R2; Pr; R) verbunden ist.

5. Optische Positionsmesseinrichtung nach Anspruch 4, wobei die Messteilung (Gf) als alternierend linienförmige Zylinderlinsenstruktur ausgebildet ist.

6. Optische Positionsmesseinrichtung nach mindestens einem der vorhergehenden Ansprüche, wobei die Periodizität (df) der Messteilung (Gf) dergestalt gewählt ist, dass in beiden Ablenkrichtungen lediglich Teilstrahlenbündel einer +1. und -1. Beugungsordnung austreten und unerwünschte, höhere Beugungsordnungen, insbesondere die +3. und -3. Beuugungsordnungen, unterdrückt werden.

7. Optische Positionsmesseinrichtung nach mindestens einem der vorhergehenden Ansprüche, wobei die aufgespaltenen Teilstrahlenbündel im Maßstab (Mf) zunächst eine Beugung an der Messteilung (Gf) erfahren, daraufhin eine Reflexion an dem mindestens einen Reflektorelement (R1, R2; Pr; R) und schließlich erneut an der Messteilung (Gf) gebeugt werden, bevor sie wieder in Richtung der Abtasteinheit (AE) propagieren.

8. Optische Positionsmesseinrichtung mindestens einem der vorhergehenden Ansprüche, wobei die Messteilung (Gf) als Durchlichtteilung oder als Auflichtteilung ausgebildet ist.

9. Optische Positionsmesseinrichtung nach Anspruch 1, wobei auf der der Abtasteinheit (AE) zugewandten Seite des Trägerkörpers eine als Durchlichtteilung ausgebildete Messteilung (Gf) angeordnet ist.

10. Optische Positionsmesseinrichtung nach Anspruch 1, wobei das Reflektorelement (R1, R2; Pr; R) entweder als mindestens ein planer Reflektorspiegel oder als totalreflektierende Fläche ausgebildet ist.

11. Optische Positionsmesseinrichtung nach mindestens einem der vorhergehenden Ansprüche, wobei die Aufspaltmittel (Mm; Mm1, Mm2) in der Abtasteinheit (AE) mindestens ein Durchlicht-Abtastgitter (Gm; Gm1, Gm2) umfassen.

12. Optische Positionsmesseinrichtung nach Anspruch 1, wobei auf dem Maßstab (Mf) mehrere Teilungsspuren angeordnet sind.

13. Optische Positionsmesseinrichtung nach Anspruch 4 und 12, wobei die zweite Ablenkwirkung aller Teilungsspuren einen gemeinsamen Fokus aufweist.

14. Optische Positionsmesseinrichtung nach Anspruch 4, wobei die zweite Ablenkwirkung so dimensioniert ist, dass der Strahlversatz (2s) am Maßstab (Mf) zwischen ein- und austretendem Strahlenbündel größer als der Strahlquerschnitt ist.

## Claims

1. Optical position-measuring device for detecting the relative position of a scanning unit (AE) and of a scale (Mf) movable thereto in at least one measuring direction (Mr), in which

   - the scale (Mf) is designed as a combined module which comprises at least one reflector element (R1, R2; Pr; R) as well as a measuring graduation (Gf) and a transparent support body, and the measuring graduation (Gf) is arranged on one side of the support body, while the at least one reflector element (R1, R2; Pr; R) is arranged on the opposite side of the support body, and
   - the scanning unit (AE) is assigned a light source (LD) and one or more detector elements (PE-1, PE0, PE+1), and
   - the scanning unit comprises splitting means which split the beam emitted by the light source (LD) into at least two partial beams in the measuring direction (Mr) which propagate after splitting in the direction of the scale (Mf).

2. Optical position-measuring device according to Claim 1, in which the measuring graduation (Gf) is designed in such a way that the at least two partial beams incident from inversely symmetrical directions experience an opposite deflecting effect and are propagated in the same spatial directions after being applied to the measuring graduation (Gf).

3.  Optical position-measuring device according to Claim 1, in which the measuring graduation (Gf) is designed in such a way that the at least two partial beams incident from different directions experience an opposite deflecting effect and propagate in symmetrical spatial directions after being applied to the measuring graduation (Gf).

4.  Optical position-measuring device according to Claim 2, in which the measuring graduation (Gf) is designed in such a way that

    - a first deflecting effect on the incident partial beam results in a plane which is defined by the measuring direction (Mr) and a normal to the scale (Mf), and
    - a second deflecting effect on the incident partial beam results in a direction which is oriented transverse to the measuring direction (Mr), a focusing onto the at least one reflector element (R1, R2; Pr; R)

    being associated with the second deflection.

5.  Optical position-measuring device according to Claim 4, in which the measuring graduation (Gf) is designed as an alternating linear cylindrical lens structure.

6.  Optical position-measuring device according to at least one of the preceding claims, in which the periodicity (df) of the measuring graduation (Gf) is selected in such a way that only partial beams of positive first order diffraction and negative first order diffraction exit in both deflecting directions, and undesired, higher diffraction orders, in particular positive third order and negative third order diffractions, are suppressed.

7.  Optical position-measuring device according to at least one of the preceding claims, in which the split partial beams in the scale (Mf) firstly experience a diffraction at the measuring graduation (Gf), thereafter a reflection at the at least one reflector element (R1, R2; Pr; R) and finally are once again diffracted at the measuring graduation (Gf) before they propagate again in the direction of the scanning unit (AE).

8.  Optical position-measuring device according to at least one of the preceding claims, in which the measuring graduation (Gf) is designed as splitting of transmitted light or splitting of reflected light.

9.  Optical position-measuring device according to Claim 1, in which a measuring graduation (Gf) designed as splitting of transmitted light is arranged on the side of the support body facing the scanning unit (AE).

10. Optical position-measuring device according to Claim 1, in which the reflector element (R1, R2; Pr; R) is designed either as at least one plane reflector mirror or as a totally reflecting surface.

11. Optical position-measuring device according to at least one of the preceding claims, in which the splitting means (Mm; Mm1, Mm2) in the scanning unit (AE) comprises at least one transmitted-light scanning grating (Gm; Gm1, Gm2).

12. Optical position-measuring device according to Claim 1, in which a plurality of graduation tracks are arranged on the scale (Mf).

13. Optical position-measuring device according to Claims 4 and 12, in which the second deflecting effect of all the graduation tracks has a common focus.

14. Optical position-measuring device according to Claim 4, in which the second deflecting effect is dimensioned such that the beam offset (2s) at the scale (Mf) between an entering and an exiting beam is larger than the beam cross section.

## Revendications

1.  Dispositif de mesure de position optique servant à détecter la position relative d'une unité de palpage (AE) ainsi que d'une règle graduée (Mf) mobile par rapport à elle dans au moins une direction de mesure (Mr) ;

    - la règle graduée (Mf) prenant la forme d'une unité combinée comprenant au moins un élément réfléchissant (R1, R2 ; Pr ; R) ainsi qu'une graduation (Gf) et un corps de support transparent et la graduation (Gf) étant disposée sur un côté du corps de support tandis que l'au moins un élément réfléchissant (R1, R2 ; Pr ; R) est disposé sur le côté opposé du corps de support ; et

- une source lumineuse (LD) ainsi qu'un ou plusieurs éléments détecteurs (PE-1, PE0, PE+1) étant associés à l'unité de palpage (AE) ; et
- l'unité de palpage comprenant des moyens de division (Mm ; Mm1, Mm2) divisant le faisceau émis par la source lumineuse (LD) en au moins deux faisceaux partiels dans la direction de mesure (Mr), lesdits faisceaux partiels se propageant après la division en direction de la règle graduée (Mf).

**2.** Dispositif de mesure de position optique selon la revendication 1, la graduation (Gf) étant réalisée de telle sorte que les au moins deux faisceaux partiels entrants en provenance de directions symétriquement opposées subissent un effet de déviation opposé et qu'ils se propagent dans les mêmes directions dans l'espace après l'amenée de la graduation (Gf).

**3.** Dispositif de mesure de position optique selon la revendication 1, la graduation (Gf) étant réalisée de telle sorte que les au moins deux faisceaux partiels entrants provenant de directions différentes subissent un effet de déviation opposé et qu'ils se propagent dans des directions dans l'espace symétriques après l'amenée de la graduation (Gf).

**4.** Dispositif de mesure de position optique selon la revendication 2, la graduation (Gf) étant réalisée de telle sorte que sur les faisceaux partiels entrants :

- il en résulte un premier effet de déviation dans un plan épousant la direction de mesure (Mr) ainsi qu'une normale prévue sur la règle graduée (Mf) ; et
- il en résulte un deuxième effet de déviation dans une direction orientée transversalement à la direction de mesure (Mr), une focalisation sur l'au moins un élément réfléchissant (R1, R2 ; Pr ; R) étant reliée à la deuxième déviation.

**5.** Dispositif de mesure de position optique selon la revendication 4, la graduation (Gf) prenant la forme d'une structure de lentille cylindrique en forme de lignes alternées.

**6.** Dispositif de mesure de position optique selon au moins l'une quelconque des revendications précédentes, la périodicité (df) de la graduation (Gf) étant choisie de telle sorte que seuls les faisceaux partiels d'un ordre de diffraction +1 et -1 sortent dans les deux directions de déviation et que les ordres de diffraction non désirés supérieurs, notamment les ordres de diffraction +3 et -3 sont refoulés.

**7.** Dispositif de mesure de position optique selon au moins l'une quelconque des revendications précédentes, les faisceaux partiels divisés subissant d'abord une diffraction dans la règle graduée (Mf) au niveau de la graduation (Gf) puis une réflexion sur l'au moins un élément réfléchissant (R1, R2 ; Pr ; R) et pour finir une nouvelle diffraction au niveau de la graduation (Gf) avant d'être à nouveau propagés en direction de l'unité de palpage (AE).

**8.** Dispositif de mesure de position optique selon au moins l'une quelconque des revendications précédentes, la graduation (Gf) prenant la forme d'une division par lumière transparente ou d'une division par lumière réfléchie.

**9.** Dispositif de mesure de position optique selon la revendication 1, une graduation (Gf) prenant la forme d'une division par lumière transparente étant disposée sur le côté du corps de support orienté vers l'unité de palpage (AE).

**10.** Dispositif de mesure de position optique selon la revendication 1, l'élément réfléchissant (R1, R2 ; Pr ; R) étant réalisé soit sous la forme d'au moins un miroir réfléchissant plan ou d'une surface entièrement réfléchissante.

**11.** Dispositif de mesure de position optique selon au moins l'une quelconque des revendications précédentes, les moyens de division (Mm ; Mml, Mm2) prévus dans l'unité de palpage (AE) comprenant au moins une grille de palpage par lumière transparente (Gm ; Gm1, Gm2).

**12.** Dispositif de mesure de position optique selon la revendication 1, plusieurs trajectoires de division étant agencées sur la règle graduée (Mf).

**13.** Dispositif de mesure de position optique selon la revendication 4 et 12, le deuxième effet de déviation de toutes les trajectoires de division comportant un foyer commun.

**14.** Dispositif de mesure de position optique selon la revendication 4, le deuxième effet de déviation étant dimensionné de telle sorte que le décalage du rayon (2s) au niveau de la règle graduée (Mf), entre un faisceau entrant et sortant, est supérieur à la section du rayon.

FIG. 1a

FIG. 1b

FIG. 2a

Mr

Mf          R1              R2

Z
Y⊗   →X

Gf

FIG. 2b

⊙ Mr

Mf     OA     R1, R2

Z
X⊙   →Y

Gf

s    s

FIG. 3

FIG. 4a

FIG. 4b

FIG. 5a

Mf    Mr    Gf

Z
Y ⊗ X

R

FIG. 5b

Mf    Mr    Gf

Z
X ⊙ Y

R

FIG. 6a

FIG. 6b

FIG. 7a

FIG. 7b

**EP 2 149 036 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0223131 A1
- EP 387520 B1
- EP 1347271 A1
- DE 102005029917 A1
- DE 102006042743
- WO 2007034379 A2
- DE 19648018 A1